# EUROPÄISCHE PATENTSCHRIFT

(11) **EP 0 576 923 B1**
(45) Veröffentlichungstag und Bekanntmachung des Hinweises auf die Patenterteilung: **20.05.1998**
(21) Anmeldenummer: 93109659.8
(22) Anmeldetag: 17.06.1993
(51) Int. Cl.: B29D 30/28, B29D 30/14

(54) **Reifenaufbaumaschine**
Type building apparatus
Dispositif de fabrication de pneus

(30) Priorität: 23.06.1992 DE 4220490
(43) Veröffentlichungstag der Anmeldung: 05.01.1994
(73) Patentinhaber: Krupp Kunststofftechnik GmbH, 45143 Essen (DE)
(72) Erfinder: Dreyer, Hans, Dipl.-Ing., D-2100 Hamburg 90 (DE); Wedekind, Werner, Dipl.-Ing., D-2125 Salzhausen (DE)

(56) Entgegenhaltungen:
- DE-A- 2 753 272
- DE-A- 4 021 671
- US-A- 1 869 317
- US-A- 2 600 291
- US-A- 4 052 246

## Beschreibung

Die Erfindung bezieht sich auf eine Reifenaufbaumaschine für die Vorbereitung von Luftreifenrohlingen mit einer Aufbautrommel zur Aufnahme von Reifenlagen und einer mit ihr zusammenwirkenden Andrückrolle, die mit einer Vielzahl gegeneinander und auf einer Achse radial zur Aufbautrommel verschieblicher Scheiben versehen ist, bei der die Scheiben untereinander gleich gestaltet sind, jede Scheibe ein Innenteil und einen dieses drehbar umgebenden Außenring umfaßt und das Innenteil eine Aussparung aufweist, mit deren Seitenflächen es auf den Seitenflächen der Achse radial zur Aufbautrommel gleitet und deren Länge größer als die entsprechende Länge des Querschnitts der Achse ist. Reifenaufbaumaschinen sowohl für Diagonal- als auch für Gürtelreifen ebenso wie für zwei- oder einstufigen Reifenaufbau sind im allgemeinen mit verschiedenen Lagenzubringern und sonstigen der Zuführung und Behandlung der einzelnen Rohlingsbestandteile dienenden Einrichtungen versehen. Dabei ist meist für jeden dieser Bestandteile eine eigene, speziell ausgestaltete Behandlungseinrichtung, beispielsweise mehrere Lagenanroller, Anheftrollen, Andrückrollen, Spleißanroller u. dgl., vorgesehen. Die Andrückrollen in ihrer vorstehend angegebenen teils beispielsweise aus der US-A-4052246 bekannten Gestaltung erlauben keine über die Rohlingsbreite und den Rohlingsumfang einstellbare oder steuerbare Andruckregelung.

Es ist Aufgabe der vorliegenden Erfindung, diese Nachteile zu vermeiden und eine Anordnung zu schaffen, die für möglichst mehrere Behandlungsschritte an verschiedenen Rohlingsbestandteilen den Einsatz einer einzigen bzw. untereinander gleicher Andrückrollen gestattet und außerdem über die Rohlingsbreite sowie den zeitlichen Behandlungsablauf unterschiedliche Andruckkräfte einzustellen ermöglicht. Danach wird bei einer Reifenaufbaumaschine der eingangs genannten Art vorgeschlagen, daß bei der Andrückrolle in dem zwischen Kopf- und Fußfläche der im wesentlichen rechteckigen Aussparung einerseits und den entsprechenden Flächen der im Querschnitt rechteckigen Achse andererseits gebildeten Kopf- und Fußhubraum je ein sich über die Länge der Andrückrolle erstreckender, mit einem Druckmittel beaufschlagbarer Hubschlauch angeordnet ist, und daß der Hubschlauch im Kopfhubraum von beiden Enden der Andrückrolle beaufschlagbar und im Mittelteil seiner Länge durch ein auswechselbares Klemmstück wählbarer Länge zusammendrückbar ist. Die Verschiebbarkeit der einzelnen Scheiben läßt bei einer Ausstattung mit einer geeigneten Druckerzeugung beispielsweise die Einstellung höherer Andruckkräfte im Mittelbereich des Reifenrohlings gegenüber den Wandbereichen und/oder im Spleißbereich gegenüber dem übrigen Rohlingsumfang zu.

Dabei empfiehlt es sich, die Achse der Andrückrolle in eine Halterung zu legen, mittels derer sie radial zur Aufbautrommel einstellbar ist. Damit wird die Grundandruckkraft der Andrückrolle über die Halterung aufgebracht und die Einstellbarkeit der Scheiben gegeneinander lediglich für eine besonders feinfühlige Einstellung über die Rohlingsbreite bzw. den Rohlingsumfang herangezogen.

In dem Raum zwischen Achse der Andrückrolle und Aussparung der Scheiben lassen sich je Scheibe gesonderte oder in geeigneter Weise zusammenhängende Druckerzeugungseinrichtungen zur Steuerung der Andruckkraft der Scheiben in Richtung auf die Aufbautrommel unterbringen. Dies geschieht in besonders vorteilhafter Weise wie angegeben so, daß in dem zwischen Kopf- und Fußfläche der Aussparung einerseits und den entsprechenden Flächen der Achse andererseits gebildeten Kopf- und Fußhubraum je ein sich über die Länge der Andrückrolle erstreckender, mit einem Druckmittel beaufschlagbarer Hubschlauch angeordnet ist. Dieser kann aus einer elastischen oder undehnbaren, aber faltbaren druckmitteldichten Innenwandung und einer sie zur Verschleißminderung umgebenden Gewebehülle gefertigt sein. Unterschiedliche Bereiche je des Kopf- und Fußhubraums können dabei unterschiedlich beaufschlagt werden und dadurch zeitlich oder über die Länge der Andrückrolle unterschiedliche Andruckkräfte der einzelnen Scheiben und bestimmter Scheibengruppen erzeugen. Eine sehr einfache und wirksame Anwendung dieser Möglichkeit ergibt sich, wenn der Hubschlauch im Kopfhubraum von beiden Enden der Andrückrolle beaufschlagbar und im Mittelteil seiner Länge durch ein auswechselbares Klemmstück wählbarer Länge zusammendrückbar ist. Damit läßt sich bereits eine Anpassung der Andrückrolle auch an verschiedene auf der Aufbautrommel zusammenzusetzende Rohlingsgrößen und -gestalten schnell und sicher erreichen.

Dabei ist der Beaufschlagungsdruck des Druckmittels in den Hubschläuchen regelbar. Eine Hubdifferenzierung kann auch durch regelbare Drosseleinbauten im Hubschlauch bewirkt werden. Für eine leichte Beweglichkeit der Scheiben gegeneinander bestehen die Scheiben zweckmäßig aus einem Werkstoff mit guten Gleiteigenschaften und Antihafteigenschaften zu den Reifenbauteilen, beispielsweise geeignetem Kunststoff, und sind wahlweise auf den dem Gummimaterial zugewandten Flächen zusätzlich einer Sandstrahlbehandlung unterzogen.

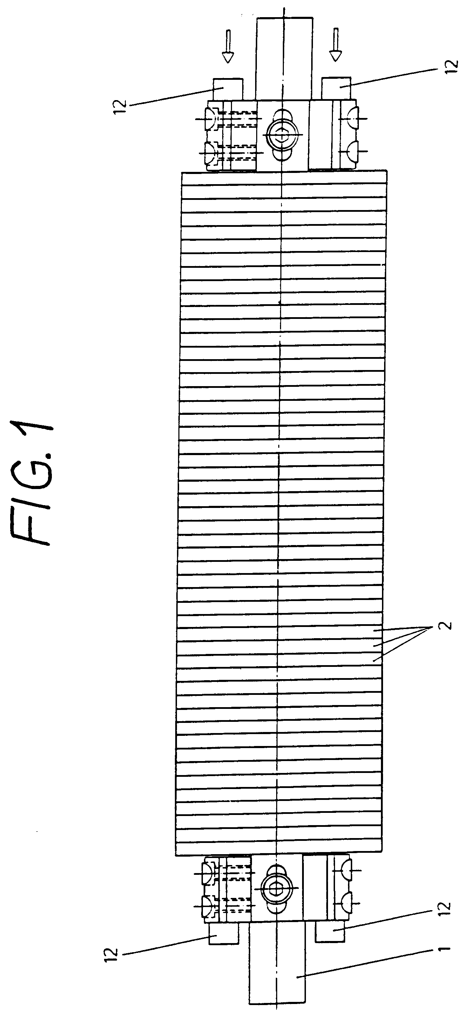

In der Zeichnung ist ein Ausführungsbeispiel einer Andrückrolle für eine Reifenaufbaumaschine gemäß der Erfindung dargestellt, und zwar in
- Fig. 1: in Ansicht, in

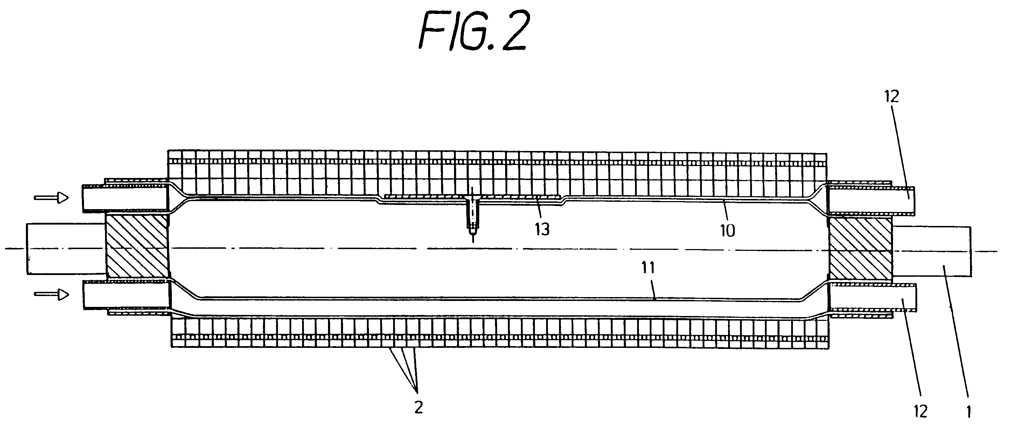

- Fig. 2: im Längsschnitt und in

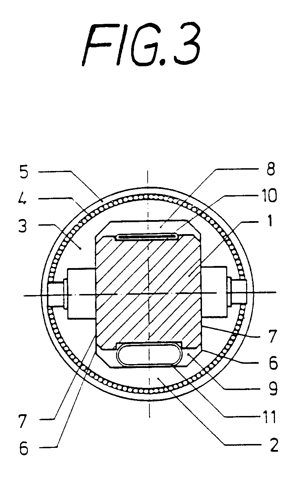

- Fig. 3: im Querschnitt.

In einer beweglichen Halterung für eine Andrückrolle einer im übrigen nicht dargestellten Reifenaufbaumaschine liegt undrehbar eine Achse 1 mit etwa quadratischem Querschnitt. Mittels der Halterung bzw. deren Antrieb ist die Andrückrolle radial zur Aufbautrommel der Reifenaufbaumaschine anstellbar. Auf der Achse 1 der Andrückrolle ist über deren nutzbare Arbeitslänge eine Vielzahl untereinander gleicher Scheiben 2 ebenfalls undrehbar, jedoch radial zur Aufbautrommel verschiebbar angeordnet. Jede Scheibe weist ein Innenteil 3 und einen dieses über eine Kugellagerung 4 umgebenden Außenring 5 auf. Das Innenteil 3 ist mit einer im wesentlichen rechteckigen Aussparung versehen, mit deren Seitenflächen 6 es auf den Seitenflächen 7 der Achse 1 gleitet. In den zwischen Kopf- und Fußfläche der Aussparung einerseits und den entsprechenden Flächen der Achse 1 andererseits gebildeten von der Aufbautrommel abgewandten Kopfhubraum 8 und der Aufbautrommel zugewandten Fußhubraum 9 ist je ein sich über die Länge der Andrückrolle erstreckender, mit Druckluft beaufschlagbarer Hubschlauch 10, 11 eingezogen. An den Enden der Hubschläuche 10, 11 sind Luftanschlüsse 12 angebracht. Mittels der Druckbeaufschlagung bzw. mittels des Differenzdruckes zwischen den beiden Hubschläuchen läßt sich die Verschiebung der Scheiben 2 gegenüber der Achse 1 insgesamt, abschnittsweise oder einzeln, also auch der Scheiben 2 gegeneinander, einstellen und steuern. Im Mittelteil der Andrückrolle ist über eine beispielsweise der Lagenbreite des Laufstreifens des aufzubauenden Reifenrohlings entsprechende Länge ein auswechselbares Klemmstück 13 eingesetzt, mittels dessen der Hubschlauch im Kopfhubraum 8 zusammengedrückt ist, so daß bei im übrigen unveränderter Druckbeaufschlagung der Anpreßdruck der dem Mittelteil zugeordneten Scheiben 2 auf die Aufbautrommel erhöht ist. Für eine leichte Verschiebbarkeit der Scheiben 2 gegeneinander sind sie aus besonders gleitfähige Oberflächen bietendem Material gefertigt, das zudem auch eine gute Rollfähigkeit in der Kugellagerung 4 aufweist.

## Patentansprüche

1. Reifenaufbaumaschine für die Vorbereitung von Luftreifenrohlingen mit einer Aufbautrommel zur Aufnahme von Reifenlagen und einer mit ihr zusammenwirkenden Andrückrolle, die mit einer Vielzahl gegeneinander und auf einer Achse (1) radial zur Aufbautrommel verschieblicher Scheiben versehen ist, bei der die Scheiben untereinander gleich gestaltet sind, jede Scheibe ein Innenteil (3) und einen dieses drehbar umgebenden Außenring (5) umfaßt und das Innenteil (3) eine Aussparung aufweist, mit deren Seitenflächen (6) es auf den Seitenflächen (7) der Achse (1) radial zur Aufbautrommel gleitet und deren Länge größer als die entsprechende Länge des Querschnitts der Achse (1) ist, dadurch gekennzeichnet, daß in dem zwischen Kopf- und Fußfläche der im wesentlichen rechteckigen Aussparung einerseits und den entsprechenden Flächen der im Querschnitt rechteckigen Achse (1) andererseits gebildeten Kopf- und Fußhubraum (8, 9) je ein sich über die Länge der Andrückrolle erstreckender, mit einem Druckmittel beaufschlagbarer Hubschlauch (10, 11) angeordnet ist, und daß der Hubschlauch (10, 11) im Kopfhubraum (8) von beiden Enden der Andrückrolle beaufschlagbar und im Mittelteil seiner Länge durch ein auswechselbares Klemmstück (13) wählbarer Länge zusammendrückbar ist.

2. Reifenaufbaumaschine nach Anspruch 1, dadurch gekennzeichnet, daß die Achse (1) der Andrückrolle in einer Halterung liegt, mittels derer sie radial zur Aufbautrommel einstellbar ist.

3. Reifenaufbaumaschine nach Anspruch 1 oder 2, dadurch gekennzeichnet, daß der Beaufschlagungsdruck des Druckmittels in den Hubschläuchen (10, 11)regelbar ist.

4. Reifenaufbaumaschine nach Anspruch 1, 2 oder 3, dadurch gekennzeichnet, daß die Scheiben aus einem Werkstoff mit guten Gleiteigenschaften und Antihafteigenschaften zu den Reifenbauteilen, beispielsweise geeignetem Kunststoff, bestehen und wahlweise auf den dem Gummimaterial zugewandten Flächen zusätzlich einer Sandstrahlbehandlung unterzogen sind.

## Claims

1. Tyre construction machine for the preparation of pneumatic tyre blanks with an assembly drum for receiving tyre plies and a pressure roller cooperating with it, which is fitted with a plurality of discs, which are displaceable relatively to one another and radially to the assembly drum on a shaft member (1), wherein the discs are of identical construction, each disc comprising an internal portion (3) and an external ring (5) rotatably surrounding this, and the internal portion (3) having a recess, with the side faces (6) of which it slides radially to the assembly drum on the side faces (7) of the shaft member (1) and the length of which is larger than the corresponding length of the cross-section of the shaft member (1), characterised in that a hoisting hose (10, 11), which extends over the length of the pressure roller and may be subjected to pressure from a pressure medium, is respectively arranged in the head and foot displacement area (8, 9) formed on the one hand between the head and foot area of the essentially rectangular recess and on the other hand between the corresponding areas of the shaft member (1) which is rectangular in cross-section; and that pressure may be applied to the hoisting hose (10, 11) from both ends of the pressure roller in the head displacement area (8) and may be compressed in the central portion of its length by a replaceable clamping piece (13) of selectable length.

2. Tyre construction machine according to Claim 1, characterised in that the shaft member (1) of the pressure roller lies in a mounting, by means of which it may be adjusted radially to the construction drum.

3. Tyre construction machine according to Claim 1 or 2, characterised in that the application pressure of the pressure medium in the hoisting hoses (10, 11) can be regulated.

4. Tyre construction machine according to Claim 1, 2 or 3, characterised in that the discs are made of a material with good sliding properties and with non-adhesive properties to the tyre components, e.g. a suitable plastic, and are selectively subjected additionally to a sand blasting treatment on the surfaces facing the rubber material.

## Revendications

1. Machine pour la fabrication de pneumatiques, destinée à la préparation d'ébauches d'enveloppes de pneumatiques, comportant un tambour de montage pour recevoir des nappes pour pneumatiques et un rouleau de pressage agissant en coordination avec lui, qui est équipé d'un grand nombre de disques pouvant coulisser radialement par rapport au tambour de montage, les uns par rapport aux autres et sur un axe (1), les disques étant réalisés identiques entre eux, chaque disque comportant une pièce intérieure (3) et un anneau extérieur tournant (5) entourant cette pièce, et la pièce intérieure (3) présentant un évidement, avec les faces latérales (6) duquel cette pièce intérieure glisse radialement par rapport au tambour de montage sur les faces latérales (7) de l'axe (1), et dont la longueur est plus grande que la longueur correspondante de la section transversale de l'axe (1),
caractérisée en ce que, dans chacun des espaces de soulèvement de tête et de pied (8, 9) formés entre, d'une part, la surface de tête et la surface de pied de l'évidement essentiellement rectangulaire et, d'autre part, les surfaces correspondantes de l'axe (1) de section rectangulaire, est chaque fois disposé un flexible de soulèvement (10, 11) s'étendant sur la longueur du rouleau de pressage et qui peut être alimenté par un fluide sous pression, et en ce que ce flexible de soulèvement (10, 11) peut être alimenté, dans l'espace de soulèvement de tête (8), par les deux extrémités du rouleau de pressage, et peut, dans la partie centrale de sa longueur, être rétracté sur lui-même au moyen d'une pièce de pincement (13) interchangeable dont on peut choisir la longueur.

2. Machine pour la fabrication de pneumatiques, suivant la revendication 1, caractérisée en ce que l'axe (1) du rouleau de pressage est placé dans un support, au moyen duquel il peut être réglé radialement par rapport au tambour de montage.

3. Machine pour la fabrication de pneumatiques, suivant la revendication 1 ou la revendication 2, caractérisée en ce que la pression d'alimentation du fluide sous pression dans les flexibles de soulèvement (10, 11) est réglable.

4. Machine pour la fabrication de pneumatiques, suivant l'une des revendication 1, 2 ou 3, caractérisée en ce que les disques sont constitués d'une matière comportant de bonnes propriétés de glissement et d'anti-adhérence par rapport aux parties constitutives du pneumatique, par exemple une matière plastique appropriée, et, si on le désire, sont soumisses, en plus, à un traitement par projection de sable sur les surfaces tournées vers le matériau en caoutchouc.
